# EUROPEAN PATENT SPECIFICATION

(11) **EP 3 106 377 B1**
(45) Date of publication and mention of the grant of the patent: **15.08.2018**
(21) Application number: 16173859.6
(22) Date of filing: 10.06.2016
(51) Int. Cl.: B62J 17/02

(54) **LID SUPPORTING STRUCTURE**
DECKELSTÜTZSTRUKTUR
STRUCTURE DE SUPPORT DE COUVERCLE

(30) Priority: 19.06.2015 JP 2015123906
(43) Date of publication of application: 21.12.2016
(73) Proprietor: HONDA MOTOR CO., LTD., Tokyo 107-8556 (JP)
(72) Inventor: MIYAMOTO, Soichiro, Saitama, Saitama 351-0193 (JP); NAKAGAWA, Hideaki, Saitama, Saitama 351-0193 (JP); KISHI, Hiroshi, Saitama, Saitama 351-0193 (JP)
(74) Representative: Fioravanti, Corrado

(56) References cited:
- CN-U- 203 372 326
- JP-A- H09 150 768
- JP-A- 2007 168 530
- US-A1- 2007 285 272

## Description

The present invention relates to a lid supporting structure.

There have been heretofore known vehicles having a configuration in which maintenance tools and on-board tools can be taken out, for example, by detaching a lid provided in a cover. For example, in Japanese Patent Application Publication No. Hei 5-254472 a maintenance lid is supported by engaging a locking piece provided at one end of the maintenance lid with a locking hole located on the cover side, and fastening the other end of the maintenance lid with screws.

However, in the existing lid supporting structure described above, a support member such as screws is exposed to the outside and affects the design. For this reason, it is preferable not to use a support member such as screws. Meanwhile, in the case of supporting the lid without screws and the like by fitting the lid into the vehicle, no screws and the like are exposed and the design can be improved, but the lid becomes difficult to detach therefrom. Meanwhile, it is conceivable to attach a handgrip to the lid in order to facilitate detachment of the lid, but the handgrip is exposed to the outside as unevenness on the lid and affects the design.

A lid supporting structure according to the preamble of claim 1 is disclosed in patent publication JP H09 150768 A. Other lid supporting structures are known from patent publications CN 204 372 326 U, JP 2007 168530 A, US 2007/285272 A1.

The present invention has been made in view of the above circumstances, and has an objective to provide a lid supporting structure which enables improvement in the design and the ease of detachment of a lid.

In order to achieve the above objective, the present invention proposes a lid supporting structure as defined in claim 1. Preferred embodiments are defined in the dependent claims.

In addition, the present invention is characterized in that the locking portion (72) is provided at a position corresponding to a lower edge (78) of the lid (48).

Further, the present invention is characterized in that the body cover is a leg shield (29) located in front of the legs of a rider, and the recessed portion (60) stores therein an emergency-use key cylinder (41c) for releasing a locked state of a vehicle.

Furthermore, the present invention is characterized in that a leg shield supporting portion (51) supporting the leg shield (29) is covered with the lid (48).

In the lid supporting structure according to the present invention, the lid is supported by the support portion which is located at a position inward of the first end part of the recessed portion by the predetermined distance, and supported by the locking portion which is located in the second end part of the recessed portion, and the space is provided between the lid and the recessed portion in an area extending between the support portion and the first end part of the recessed portion. Accordingly, by pushing the first end part of the lid toward the space defined between the lid and the recessed portion, this first end part is moved toward the space whereas the second end part of the lid is floated, and thus the support by the locking hole located in the second end part is released. Thereby, it is possible to detach the lid easily without screws, a handgrip, and the like by pushing the first end part of the lid, thus improving the design and the ease of detachment of the lid.

In addition, the locking portion is provided at a position corresponding to the lower edge of the lid. Thus, the portion to be locked in the locking portion becomes less likely to be seen from the outside, thereby providing good design.

Moreover, the body cover is the leg shield located in front of the legs of a rider, and the recessed portion stores therein the emergency-use key cylinder for releasing the locked state of the vehicle. Thereby, it is possible to improve the design and the ease of detachment of the lid of the leg shield which is detached in case of emergency.

Further, the leg shield supporting portion supporting the leg shield is covered with the lid.

Thereby, the leg shield supporting portion can be hidden with the lid and the design can be improved.

Further characteristics and advantages of the invention will become apparent from the following description provided with reference to the accompanying drawings, wherein:
Fig. 1 is a right side view of a motorcycle having a lid supporting structure according to an embodiment of the present invention;
Fig. 2 is a view illustrating a front part of the motorcycle as viewed from the rear which is the rider side;
Fig. 3 is a plan view of an upper center cover;
Fig. 4 is a view illustrating the front part of the motorcycle with a lid detached, as viewed from the rear;
Fig. 5 is a right side view of the front part of the motorcycle with the lid detached;
Fig. 6 is a plan view of an inner cover;
Fig. 7 is a view illustrating the lid as viewed from the rear;
Fig. 8 is a right side view of the lid;
Fig. 9 is a sectional view taken along a line IX-IX in Fig. 2;
Fig. 10 is a sectional view taken along a line X-X in Fig. 2;
Fig. 11 is a sectional view taken along a line XI-XI in Fig. 2; and
Fig. 12 is a view illustrating the state of manipulation of a key cylinder with the lid detached.

Hereinbelow, an embodiment of the present invention is described with reference to the drawings. Note that, throughout the description, directional terms such as front, rear, left, and right are identical to those directions in relation to a vehicle body, unless otherwise noted. In addition, throughout the drawings, reference numeral FR represents the front side of the vehicle body, reference numeral UP represents the upper side of the vehicle body, and reference numeral LH represents the left side of the vehicle body.

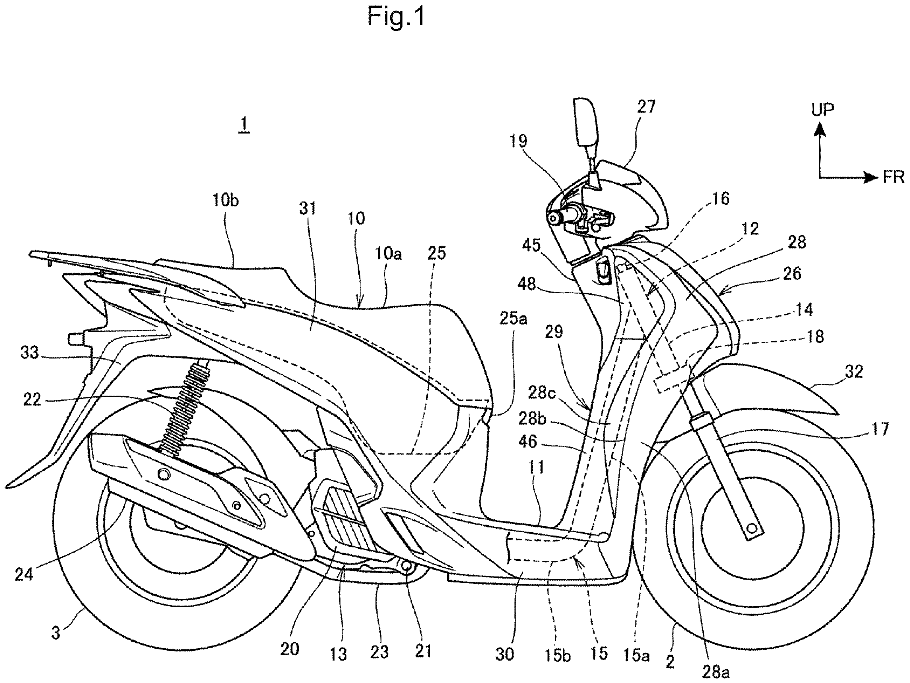

Fig. 1 is a right side view of a motorcycle 1 having a lid supporting structure according to the embodiment of the present invention.

The motorcycle 1 is a scooter type straddle-type vehicle having a low-level step floor 11 for a rider seated on a seat 10 to put his/her feet on. The motorcycle 1 has a front wheel 2 in front of a body frame 12, and a rear wheel 3 being a driving wheel is axially supported by a unit swing engine 13 disposed in a rear part of the vehicle.

The body frame 12 includes: a head pipe 14 which is provided at the front end thereof; a main frame 15 which extends downward from the head pipe 14 and then extends rearward; and a seat frame (not illustrated) which extends rearward and upward from the rear end of the main frame 15 to a rear end part of the vehicle body. The main frame 15 includes: a down frame portion 15a which extends rearward and downward from a rear surface of the head pipe 14; and an under frame portion 15b which extends rearward from the lower end of the down frame portion 15a.

A steering shaft 16 is axially supported on the head pipe 14, and a pair of left and right front forks 17 is supported on a bridge 18 provided on the lower end of the steering shaft 16. A handlebar 19 configured to be manipulated by the rider is provided on the upper end of the steering shaft 16. The front wheel 2 is supported by lower end parts of the respective front forks 17.

The unit swing engine 13 is a unit swing type engine in which an engine 20 and a transmission case (not illustrated) housing therein a continuously variable transmission mechanism are united in one unit, and the rear wheel 3 is axially supported by a rear end part of the transmission case. The unit swing engine 13 is coupled to a rear part of the main frame 15 via a pivot shaft 21 provided in a front part of the unit swing engine, and is vertically swingable about the pivot shaft 21. In other words, the unit swing engine 13 also functions as a swing arm supporting the rear wheel 3.

A rear suspension 22 is suspended between a rear part of the unit swing engine 13 and a rear part of the body frame 12.

An exhaust pipe 23 of the engine 20 is drawn out of a cylinder head (not illustrated) and extends rearward to be connected to a muffler 24 located at the outer side of the rear wheel 3.

A storage box 25 capable of storing therein goods such as a helmet is provided above the engine 20, and the storage box 25 is supported on the seat frame.

The storage box 25 is formed in the shape of a box open at its upper surface, and this opening is closed by the seat 10. The seat 10 is coupled to a front end part of the storage box 25 via a hinge unit 25a located at its front end part. The storage box 25 is opened and closed by turning the seat 10 about the hinge unit 25a. By way of a seat locking mechanism (not illustrated) provided in a rear part of the storage box 25, the seat 10 is locked in the closed state where it closes the storage box 25.

The seat 10 integrally includes: a front seat 10a for the rider to sit on; and a rear seat 10b for a passenger to sit on.

The motorcycle 1 includes a resin-made cover 26 which covers the body frame 12 and the like. The cover 26 includes: an upper cover 27 which covers a central part of the handlebar 19; a front cover 28 which covers the head pipe 14 from the front; a leg shield 29 (body cover) which covers the head pipe 14 from the rear and covers the rider's legs sitting on the front seat 10a from the front; the step floor 11; an under cover 30 which covers the main frame 15 from below; and a rear cover 31 which covers the storage box 25 from its lateral sides. The motorcycle 1 also includes: a front fender 32 which covers the front wheel 2 from the upper side; and a rear fender 33 which covers the rear wheel 3 from the upper side.

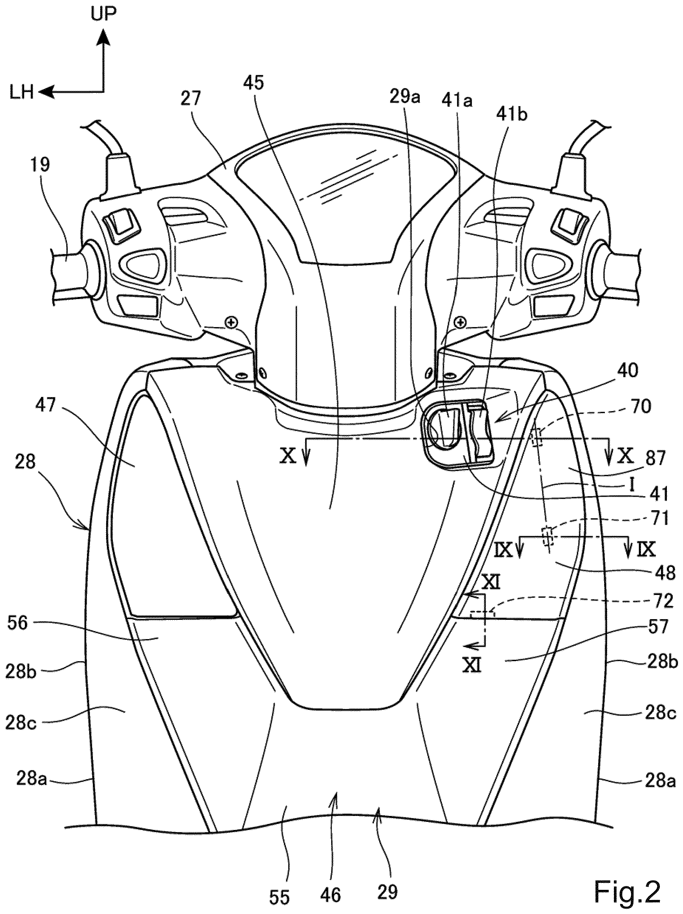

Fig. 2 is a view illustrating a front part of the motorcycle 1 as viewed from the rear which is the rider side.

The motorcycle 1 includes a smart key system 40 which enables start-up of the engine 20 and locking/unlocking of the storage box 25 without mechanical key manipulation.

The smart key system 40 includes: a mobile key (not illustrated) which has its ID (identification code) and is configured to transmit the ID via a communication such as a radio communication; a lock module 41 which is configured to authenticate the received ID of the mobile key; an actuator (not illustrated) which is configured to be actuated upon receipt of a signal from the lock module 41; the seat locking mechanism; and a control cable (not illustrated) which connects the seat locking mechanism and the actuator to each other.

The lock module 41 is connected to an ECU (not illustrated) which is configured to control the engine 20 and electrical units of the motorcycle 1. The lock module 41 includes a main switch knob 41a and a seat unlocking button 41b. The lock module 41 is embedded inside the leg shield 29, and the main switch knob 41a and the seat unlocking button 41b are exposed to the rear through an opening 29a provided in an upper part of the leg shield 29.

The ECU, the lock module 41, and the actuator are driven by the power of a battery (not illustrated) installed in the motorcycle 1. For example, this battery is disposed near the storage box 25 so as to be accessible through the inside of the storage box 25 with the storage box 25 open.

The lock module 41 unlocks the main switch knob 41a only when authenticating the validity of the ID received from the mobile key. The engine 20 starts when a rider manipulates the unlocked main switch knob 41a.

In addition, upon manipulation of the seat unlocking button 41b, the lock module 41 carries out ID authentication with the mobile key and, only when authenticating the validity of the ID, it drives the actuator to unlock the seat locking mechanism via the control cable.

In other words, the rider can start the engine 20 and lock/unlock the storage box 25 without mechanical key manipulation once the ID of the mobile key that he/she carries is authenticated by the lock module 41. Thus, the motorcycle 1 provides good security performance and usability.

As illustrated in Figs. 1 and 2, the front cover 28 includes a pair of left and right vertically extending portions 28a, 28a (a left vertically extending portion is not illustrated) which extend vertically along the left and right sides of the head pipe 14 and the down frame portion 15a. The vertically extending portions 28a, 28a extend from the vicinity of the upper end of the head pipe 14 to the vicinity of the lower end of the down frame portion 15a, and are located behind the front wheel 2.

The front cover 28 also includes a pair of left and right side rear walls 28c, 28c which extend while tilting rearward and vehicle-widthwise inward from vehicle-widthwise outer edges 28b, 28b of the vertically extending portions 28a, 28a. The side rear walls 28c, 28c are formed to extend continuously across the substantially entire vertical length of the front cover 28.

The leg shield 29 includes: an upper center cover 45 which covers the head pipe 14 from the rear; an inner cover 46 which covers the down frame portion 15a from the rear; a storage cover 47 which covers a left upper part of the inner cover 46 at the left (one) side of the upper center cover 45; and a lid 48 which covers a right upper part of the inner cover 46 at the right (the other) side of the upper center cover 45.

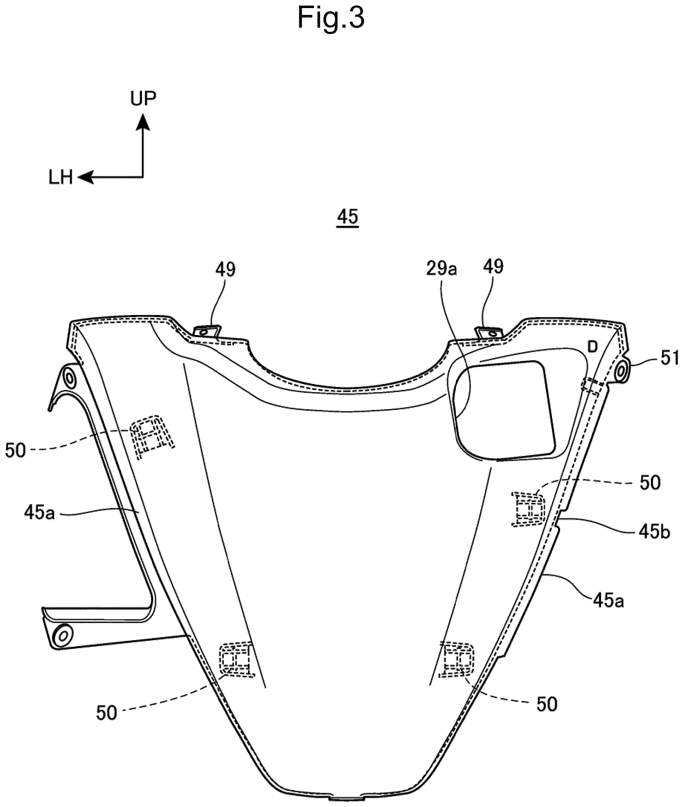

Fig. 3 is a plan view of the upper center cover 45.

In the rear view, the upper center cover 45 is formed in the shape of a substantially triangular plate tapered toward its lower end, and the interval between left and right side edges 45a, 45a becomes smaller toward the lower end. The right side edge 45a includes a notch portion 45b in which the lid 48 is designed to be locked.

The upper center cover 45 includes multiple upper-edge coupling portions 49 which extend forward and upward from its upper edge and are coupled to an upper part of the front cover 28. The upper center cover 45 also includes multiple coupling portions 50 which are arranged on an inner surface of the upper center cover 45 at positions near the side edges 45a, 45a and coupled to the inner cover 46.

The upper center cover 45 includes a side coupling portion 51 (leg shield supporting portion) which protrudes vehicle-widthwise outward from an upper part of the right side edge 45a. Besides, the opening 29a through which to expose the main switch knob 41a and the seat unlocking button 41b is formed near the side coupling portion 51 and located in an upper right part of the upper center cover 45.

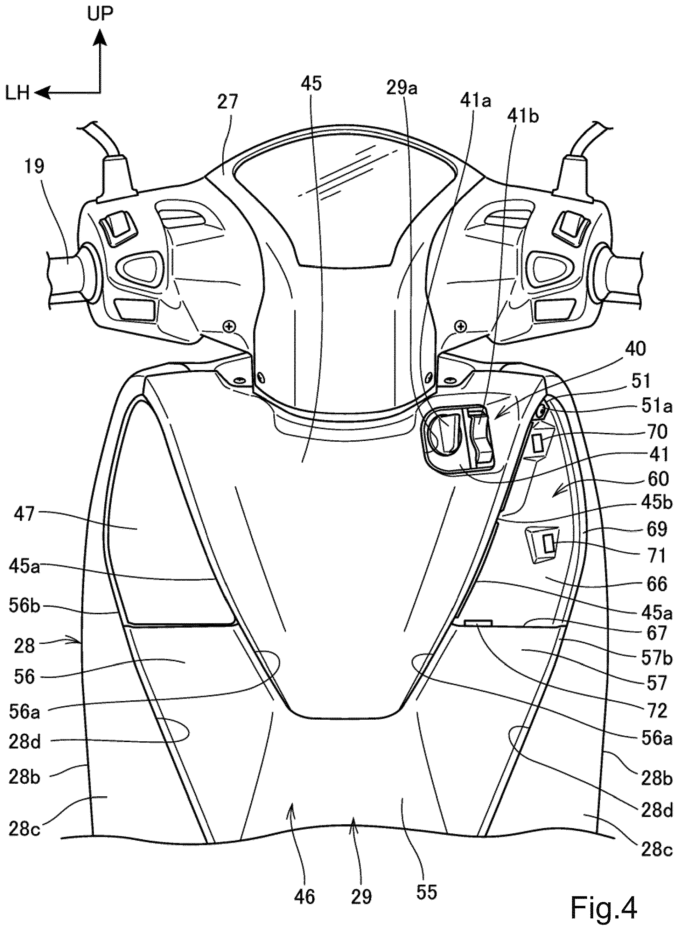

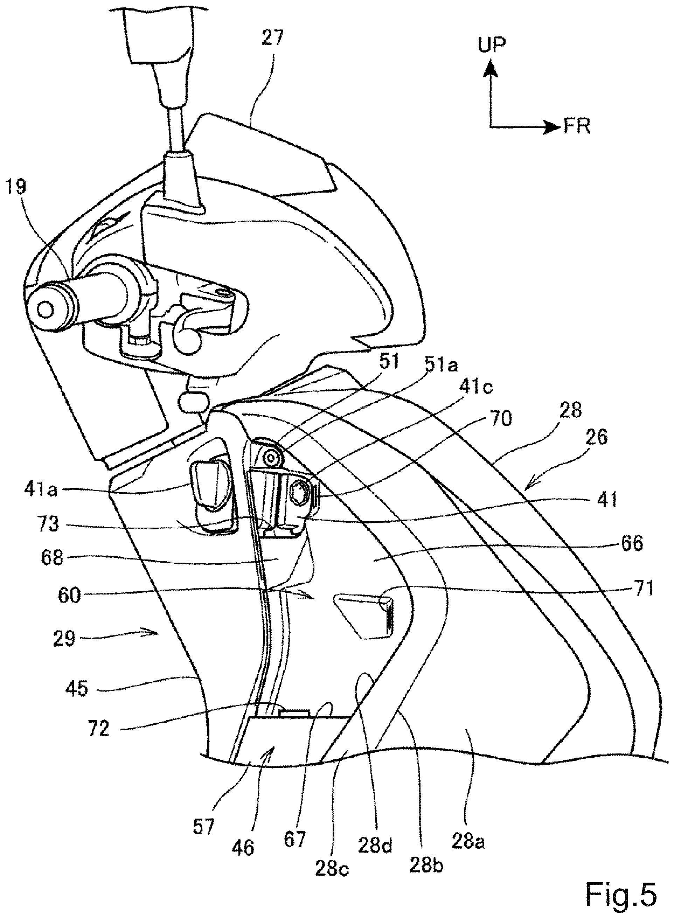

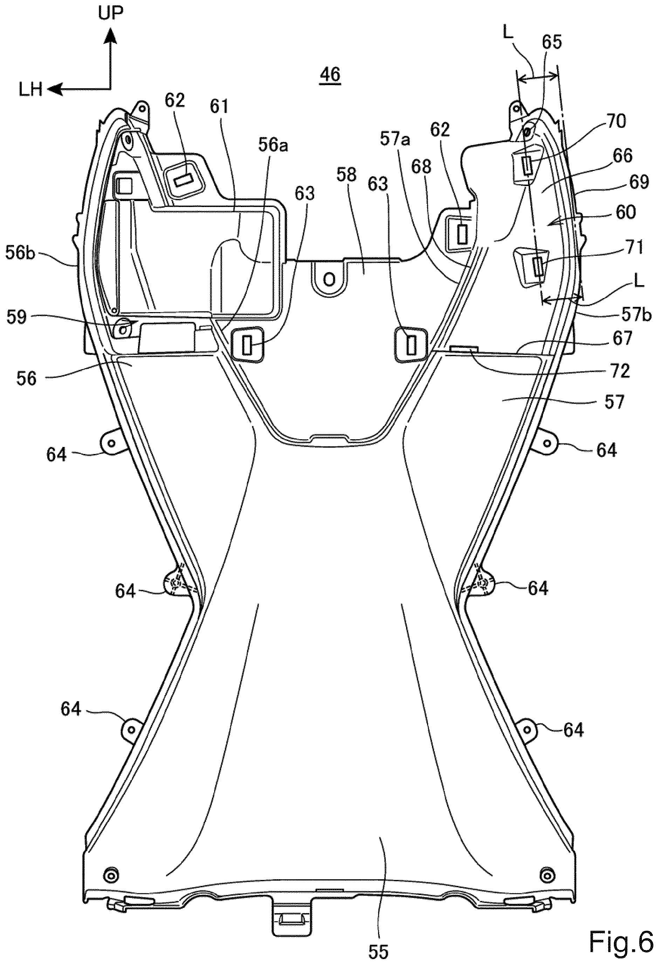

Fig. 4 is a view illustrating the front part of the motorcycle 1 with the lid 48 detached, as viewed from the rear. Fig. 5 is a right side view of the front part of the motorcycle 1 with the lid 48 detached. Fig. 6 is a plan view of the inner cover 46.

As illustrated in Figs. 4 to 6, the inner cover 46 includes: a lower cover portion 55 which extends downward toward the step floor 11 continuously from the lower end of the upper center cover 45; a pair of left and right upper side cover portions 56, 57 which extend upward from upper left and right parts of the lower cover portion 55; and an upper central cover portion 58 which extends laterally to bridge the gap between lower parts of the respective upper side cover portions 56, 57.

The upper side cover portions 56, 57 cover the gaps between the upper center cover 45 and the pair of side rear walls 28c, 28c. The upper ends of the upper side cover portions 56, 57 extend to the vicinity of the upper edge of the upper center cover 45.

In the rear view, vehicle-widthwise inner edge portions 56a, 57a of the respective upper side cover portions 56, 57 overlap the side edges 45a, 45a of the upper center cover 45 on their back sides. In addition, in the rear view, vehicle-widthwise outer edge portions 56b, 57b of the respective upper side cover portions 56, 57 overlap inner edge portions 28d, 28d of the side rear walls 28c, 28c of the front cover 28 on their back sides.

The upper side cover portions 56, 57 respectively include, in their upper parts, recessed portions 59, 60 which are recessed forward, i.e., toward the inside of the leg shield 29.

The recessed portion 59 of the left upper side cover portion 56 is covered with the storage cover 47. The recessed portion 60 of the right upper side cover portion 57 is covered with the lid 48.

The recessed portion 59 includes a box-shaped storage 61 which bulges forward and is open in its rear surface. The storage 61 can store small articles therein. An open part of the storage 61 is covered with the storage cover 47 provided openably/closably.

The upper side cover portions 56, 57 respectively include, in their upper parts, extending portions which extend to the back side of the upper center cover 45, and the extending portions are respectively provided with engaging portions 62, 62 to which the upper coupling portions 50, 50 of the upper center cover 45 (Fig. 3) are coupled. In addition, the upper central cover portion 58 includes, in its side parts, engaging portions 63, 63 to which the lower coupling portions 50, 50 of the upper center cover 45 are coupled.

The inner cover 46 includes, in its lateral side edge parts, multiple coupling portions 64 which are coupled to the side rear walls 28c, 28c.

The right recessed portion 60 is provided at its upper end part with an upper end coupling portion 65 to which the side coupling portion 51 (Fig. 3) of the upper center cover 45 is coupled. As illustrated in Fig. 5, the side coupling portion 51 is fastened and secured on the upper end coupling portion 65 with a bolt 51a inserted into the side coupling portion 51. The side coupling portion 51 is a leg shield supporting portion which allows the inner cover 46 to support the upper center cover 45 constituting a part of the leg shield 29.

The recessed portion 60 includes: a front wall portion 66 which is provided to substantially face the back surface of a front surface part of the front cover 28; a lower wall portion 67 which extends rearward from the lower edge of the front wall portion 66 and constitutes the lower surface of the recessed portion 60; an inner sidewall 68 which extends longitudinally so as to connect the vehicle-widthwise inner edge of the front wall portion 66 and the corresponding side edge 45a of the upper center cover 45 to each other; and an outer sidewall 69 which extends longitudinally so as to connect the vehicle-widthwise outer edge of the front wall portion 66 and the inner edge portion 28d of the corresponding side rear wall 28c.

In the rear view, the recessed portion 60 is formed in a substantially triangular shape tapered toward its upper end, and the inner sidewall 68 and the outer sidewall 69 have an interval between them that becomes smaller toward their upper ends and meet at the upper ends.

The front wall portion 66 of the recessed portion 60 has an upper support hole portion 70 (support portion) and a lower support hole portion 71 (support portion) which are designed to support the lid 48. The front wall portion 66 of the recessed portion 60 also has in its lower end part a locking hole 72 (locking portion) which is designed to lock the lid 48.

The upper support hole portion 70 is provided in the upper end part of the recessed portion 60 and is located at a position vehicle-widthwise inward of the outer sidewall 69 by a predetermined distance L. The lower support hole portion 71 is provided in a vertically intermediate part of the recessed portion 60 and is located at a position vehicle-widthwise inward of the outer sidewall 69 by a predetermined distance L. The predetermined distance L of the upper support hole portion 70 and that of the lower support hole portion 71 are substantially the same.

The locking hole 72 is disposed in the lower wall portion 67 of the recessed portion 60 at a position close to its vehicle-widthwise inner end part.

The upper support hole portion 70 and the lower support hole portion 71 are disposed in an upper part of the recessed portion 60 at a position close to the outer sidewall 69, and the locking hole 72 is disposed in a lower end part of the recessed portion 60 at a position close to the inner sidewall 68. In other words, the upper support hole portion 70 and the lower support hole portion 71 are disposed in the upper part of the recessed portion 60 at one end part thereof close to the outer sidewall 69, and the locking hole 72 is disposed in the lower end part of the recessed portion 60 at the other end part thereof close to the inner sidewall 68.

In addition, as illustrated in the side view of Fig. 5, the front wall portion 66 is provided to tilt upward toward the rear in a portion from its vertically intermediate part to its upper end, and the upper support hole portion 70 is located above and behind the lower support hole portion 71.

As illustrated in Fig. 5, the inner sidewall 68 of the recessed portion 60 includes an opening 73 provided by notching its upper part. The opening 73 is formed at the outer side of the lock module 41, and an outer side surface of the lock module 41 is partially exposed to the inside of the recessed portion 60 through the opening 73.

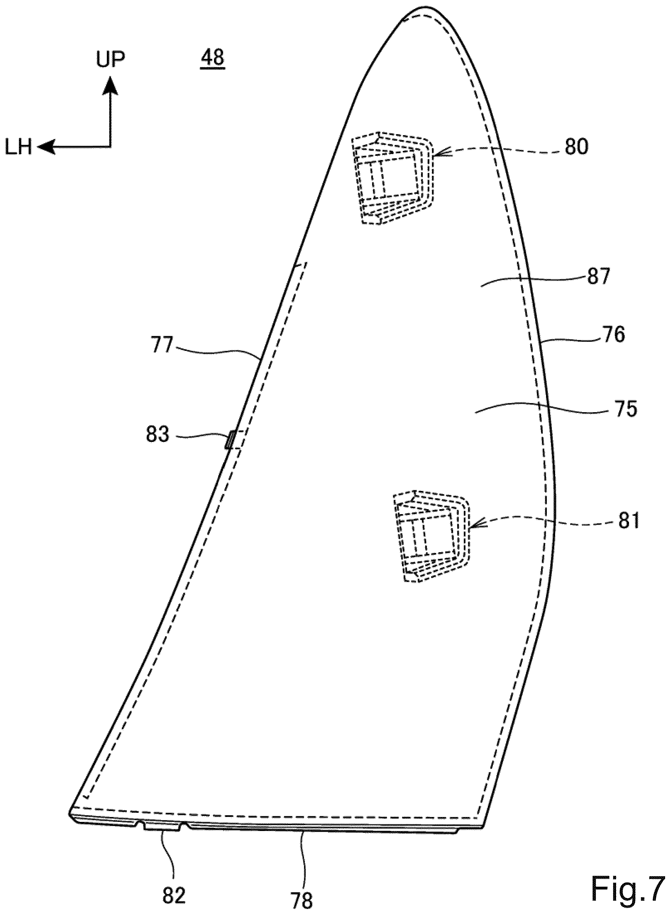

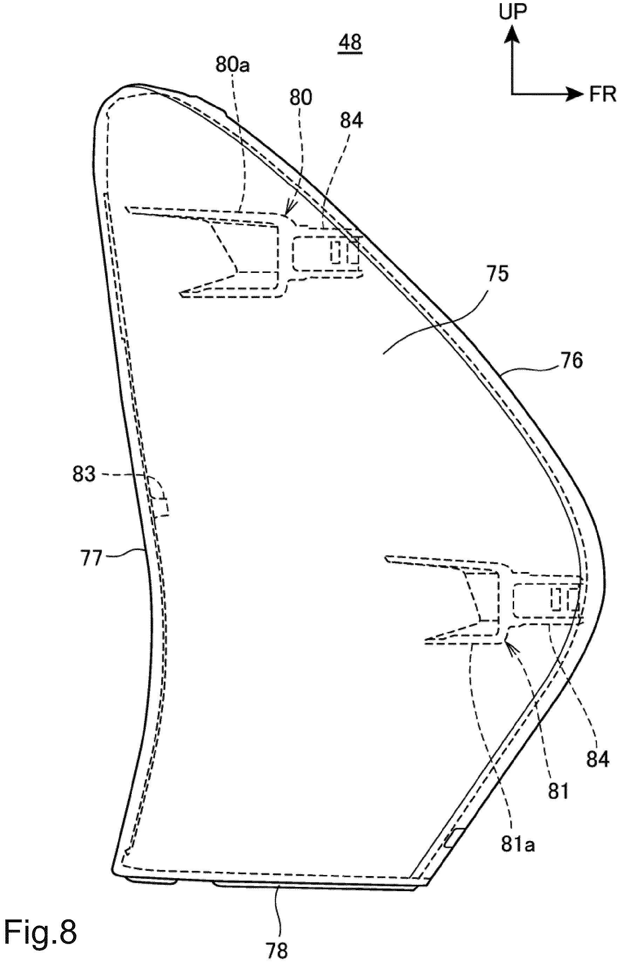

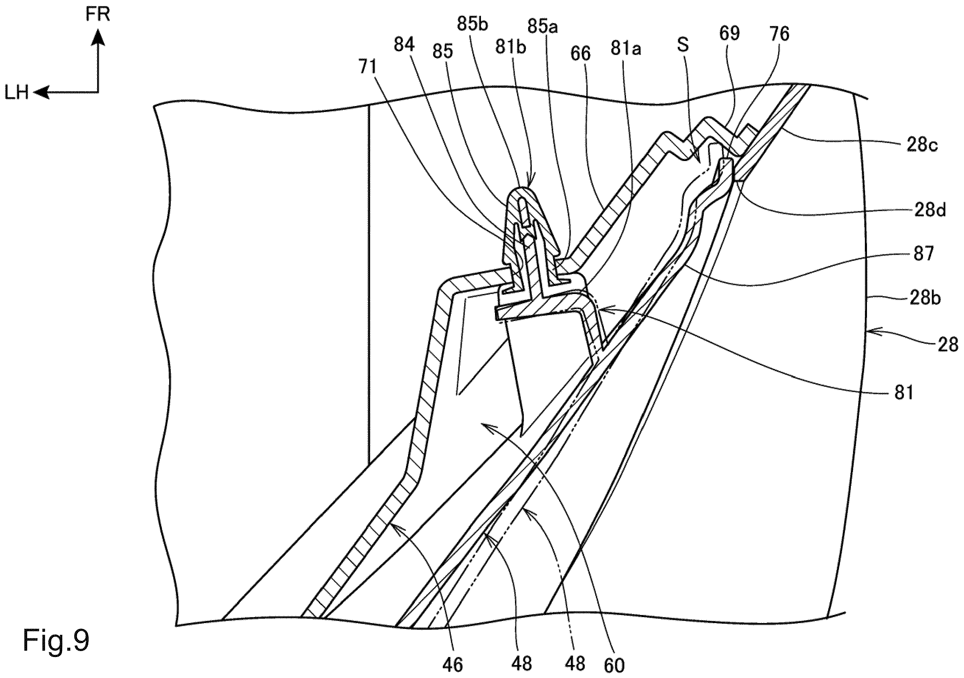

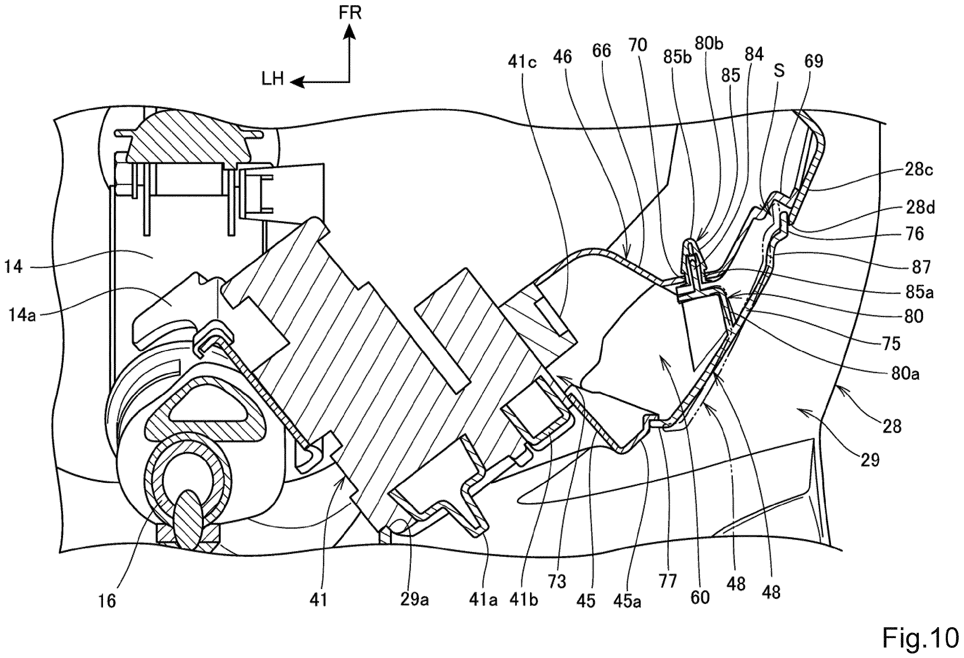

Fig. 7 is a view illustrating the lid 48 as viewed from the rear. Fig. 8 is a right side view of the lid 48. Fig. 9 is a sectional view taken along a line IX-IX in Fig. 2. Fig. 10 is a sectional view taken along a line X-X in Fig. 2. Note that, in Figs. 9 and 10, parts such as cables arranged inside the leg shield 29 are not illustrated.

Referring to Figs. 7 to 10, the lid 48 is a platy member formed to be suited to the shape of the recessed portion 60, and includes a platy lid body 75 which is formed in a substantially triangular shape in the rear view and designed to close the recessed portion 60 and the opening 73.

The lid body 75 includes: a lid outer edge portion 76 which extends along the inner edge portion 28d of the corresponding side rear wall 28c of the front cover 28; a lid inner edge portion 77 which extends along the corresponding side edge 45a of the upper center cover 45; and a lid lower edge portion 78 which extends along the rear edge of the lower wall portion 67 of the recessed portion 60.

The lid 48 includes: an upper support projecting portion 80 and a lower support projecting portion 81 which stand on the back surface of the lid body 75 and protrude to the inside of the recessed portion 60; a locking piece 82 (Fig. 7) which stands on the lid lower edge portion 78 and protrudes toward the recessed portion 60; and a side locking piece 83 which stands on the lid inner edge portion 77 and protrudes toward the recessed portion 60.

The upper support projecting portion 80 is a projecting portion designed to engage with the upper support hole portion 70 of the recessed portion 60 and is provided on an upper end part of the lid body 75. The lower support projecting portion 81 is a projecting portion designed to engage with the lower support hole portion 71 of the recessed portion 60 and is provided on a vertically intermediate part of the lid body 75 at a position close to the lid outer edge portion 76.

The upper support projecting portion 80 and the lower support projecting portion 81 respectively include: base portions 80a, 81a which are arranged on the back surface of the lid body 75; and protruding portions 80b, 81b which are arranged on the distal end surfaces of the respective base portions 80a, 81a. More specifically, the protruding portions 80b, 81b respectively include: protrusion supporting pieces 84 which are formed integrally on the distal end surfaces of the respective base portions 80a, 81a; and protrusions 85 which are mounted on the protrusion supporting pieces 84 so as to cover the protrusion supporting pieces from their outer sides. Each protrusion 85 includes: a shaft-shaped portion 85a; and a tapered portion 85b which is tapered toward its distal end from its proximal end portion having a larger diameter than the shaft-shaped portion 85a.

As illustrated in Fig. 10, the lock module 41 is provided at the right side of the head pipe 14 via a stay 14a provided on the head pipe 14. The lock module 41 has a handlebar locking function to restrict the turning of the steering shaft 16 during parking.

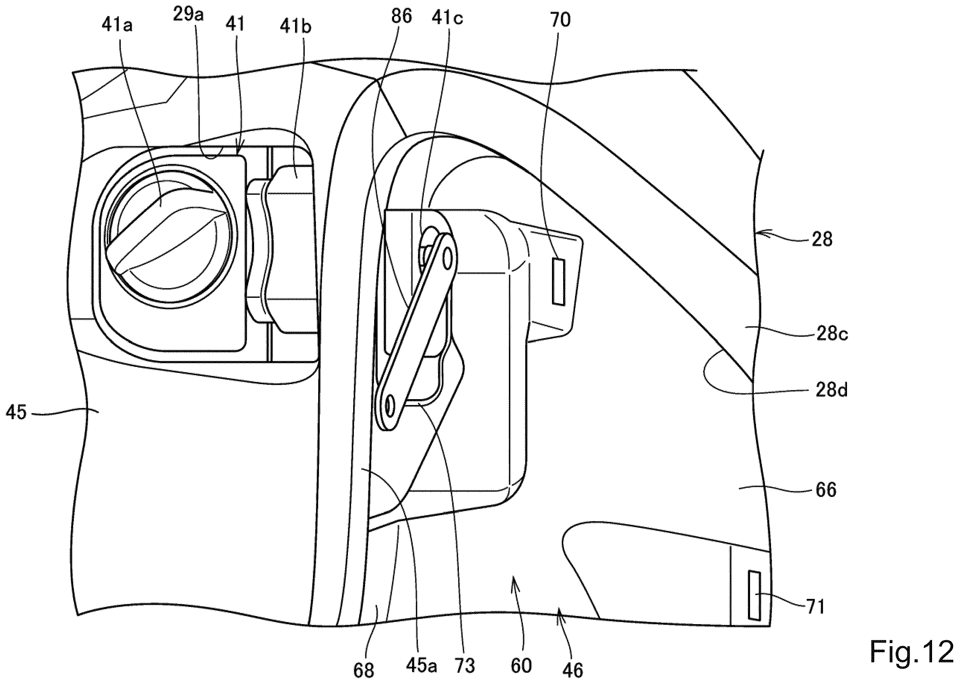

The lock module 41 includes at its right part (outer part) an emergency-use key cylinder 41c for forcibly releasing the locking of the storage box 25. The key cylinder 41c is exposed to the inside of the recessed portion 60 through the opening 73 of the recessed portion 60. A release key 86 (Fig. 12) dedicated to control the key cylinder 41c is designed to engage with the key cylinder 41c. The key cylinder 41c is connected to the control cable so that it can control the control cable.

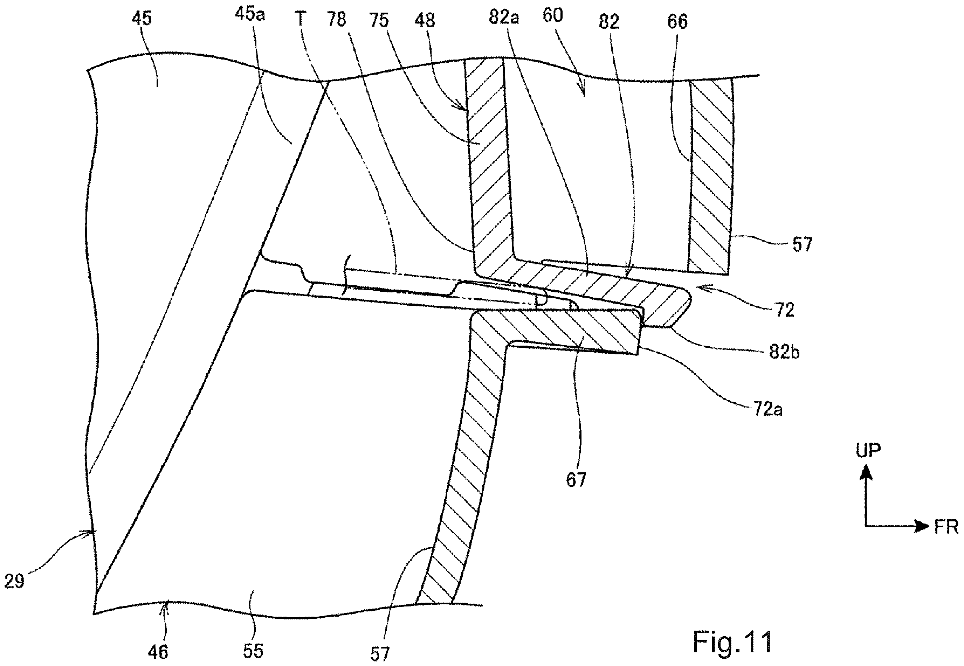

Fig. 11 is a sectional view taken along a line XI-XI in Fig. 2. Note that, in Fig. 11, parts such as cables arranged inside the leg shield 29 are not illustrated.

The locking piece 82 of the lid 48 includes: a platy arm portion 82a which is bent at a substantially right angle with respect to the lid body 75 extending vertically and extends toward the front wall portion 66 of the recessed portion 60; and a claw portion 82b which protrudes toward the lower wall portion 67 from the distal end of the arm portion 82a.

The locking hole 72 of the recessed portion 60 in which the locking piece 82 is designed to be locked is an opening portion formed in a corner portion of the front wall portion 66 and the lower wall portion 67 at which the lower edge of the front wall portion and the front edge of the lower wall portion meet at a substantially right angle, and is provided to extend over the front wall portion 66 and the lower wall portion 67.

As illustrated in Figs. 9 and 10, the end of the outer sidewall 69 of the recessed portion 60 is in contact with the back surface of the corresponding side rear wall 28c and is thereby continuous to the side rear wall 28c. More specifically, the end of the outer sidewall 69 is located deeper inside the front cover 28 than the inner edge portion 28d of the side rear wall 28c is, and the inner edge portion 28d protrudes to the inside of the recessed portion 60 greater than the outer sidewall 69 does.

The lid 48 is mounted on the recessed portion 60 by: inserting the upper support projecting portion 80 and the lower support projecting portion 81 into and engaging them with the upper support hole portion 70 and the lower support hole portion 71 respectively; and inserting the locking piece 82 and the side locking piece 83 into and locking them to the locking hole 72 and the notch portion 45b respectively.

The upper support projecting portion 80 and the lower support projecting portion 81 are secured by: inserting the tapered portions 85b, 85b into the upper support hole portion 70 and the lower support hole portion 71 respectively; and fitting the shaft-shaped portions 85a, 85a to the upper support hole portion 70 and the lower support hole portion 71 respectively.

As illustrated in Fig. 11, the locking piece 82 is locked by causing the claw portion 82b to be hooked on a rear edge 72a of the locking hole 72.

As illustrated in Figs. 9 and 10, in the state where the lid 48 is mounted, the front surface of the lid outer edge portion 76 is in contact with the back surface of the inner edge portion 28d of the corresponding side rear wall 28c, and the back surface of the lid inner edge portion 77 (Fig. 10) is in contact with the front surface of the corresponding side edge 45a of the upper center cover 45.

In addition, between the lid outer edge portion 76 and a portion of the front wall portion 66 opposed to the lid outer edge portion 76, a space S is formed to extend in the depth direction of the recessed portion 60, i.e., in the thickness direction of the lid 48. In this embodiment, the longitudinal depth of the space S is set larger than the thickness of the lid outer edge portion 76. In this way, since the lid outer edge portion 76 is in contact with the back surface of the inner edge portion 28d and the space S is provided between the lid outer edge portion 76 and the recessed portion 60, the lid outer edge portion 76 is movable toward the space S. In other words, the space S is a space into which the lid outer edge portion 76 can be pushed in the depth direction of the recessed portion 60.

Here, a description is given of a procedure in the case of detaching the lid 48.

First, as illustrated in Fig. 11, the locking of the lid with the claw portion 82b is released by: inserting a rod member T into the gap between the arm portion 82a and the lower wall portion 67; and elastically deforming the arm portion 82a upward with the rod member T. As the rod member T, the handle of the release key 86 (Fig. 12) to be described later may be used, for example.

Next, by pushing the vicinity of the lid outer edge portion 76 of the lid 48 from the rear, as illustrated by an imaginary line in Figs. 9 and 10, the lid 48 is turned like a seesaw about the protruding portions 80b, 81b, and the lid outer edge portion 76 situated on one end side of the lid goes deep inside the space S whereas the lid inner edge portion 77 situated on the other end side thereof moves away from the side edge 45a. Thereby, the other end part of the lid 48 including the locking piece 82 is floated toward the rear. Thus, by pulling the lid rearward while holding this floating portion, the engagement of the lid by the upper support projecting portion 80 and the lower support projecting portion 81 can be released and the lid 48 can be detached.

In addition, since the locking strength of the side locking piece 83 is weak, this locking is released when the lid 48 is floated rearward. Note that the side locking piece 83 does not necessarily have to be provided.

More specifically, a portion of the lid 48 on the lid outer edge portion 76 side with respect to an imaginary straight line I (Fig. 2) connecting the upper support hole portion 70 and the lower support hole portion 71 can be used as a push operation portion 87 for pushing the lid 48 toward the space S. Meanwhile, the locking hole 72 is provided opposite the push operation portion 87 with respect to the arrangement position of the upper support hole portion 70 and the lower support hole portion 71 (imaginary straight line I).

In this embodiment, it is possible to support the lid 48 only by inserting the upper support projecting portion 80, the lower support projecting portion 81, and the locking piece 82 of the lid 48 into the upper support hole portion 70, the lower support hole portion 71, and the locking hole 72, and thus no support member such as screws has to be provided on the front surface side of the lid 48. Thereby, the appearance of the lid 48 can be simplified, and the design (appearance) of the lid 48 can be improved. In addition, by pushing the push operation portion 87 on one end side of the lid 48, it is possible to float the other end side of the lid 48, and thus hold this floating portion and detach the lid 48. This eliminates the need to attach a handgrip or the like for holding the lid 48 on the front surface of the lid 48, thus simplifying the appearance of the lid 48. Thereby, the design of the lid 48 and the ease of detachment of the lid 48 can be improved.

In addition, the front surface of the lid outer edge portion 76 is in contact with the back surface of the inner edge portion 28d, and the back surface of the lid inner edge portion 77 is in contact with the front surface of the side edge 45a of the upper center cover 45. Thus, the lid 48 can have a configuration where the push operation portion 87 on one end side of the lid is capable of being pushed toward the space S and at the same time the lid 48, the front cover 28, and the upper center cover 45 can be connected continuously without any gaps between them, whereby the entry of foreign matters and the like into the recessed portion 60 can be suppressed and the design is improved.

Moreover, since the side coupling portion 51 and the bolt 51a are arranged in the recessed portion 60 and are covered with and hidden by the lid 48, the side coupling portion 51 and the bolt 51a are not visible from the outside, thereby providing good appearance.

Further, since the locking hole 72 is provided at a position corresponding to the lid lower edge portion 78 of the lid 48, the locking piece 82 designed to be locked in the locking hole 72 is located at a low position. This makes the locking piece 82 less likely to be seen from the rider side, thereby providing good design.

Fig. 12 is a view illustrating the state of manipulation of the key cylinder 41c with the lid 48 detached.

In the case of an emergency situation where the storage box 25 cannot be opened via the lock module 41 and the actuator due to reasons such as the run-out of the battery of the motorcycle 1 or the mobile key, the release key 86 can be used. In this case, the key cylinder 41c can be manipulated by: detaching the lid 48 to let the key cylinder 41c be exposed to the outside; and inserting the release key 86 into the key cylinder 41c through the recessed portion 60. By the manipulation of the key cylinder 41c, the seat locking mechanism is released through the control cable and the storage box 25 is opened.

In addition, when the battery is run out, the battery can be charged by: opening the storage box 25 by the manipulation of the key cylinder 41c; and accessing the battery through the inside of the storage box 25.

As has been described above, according to the embodiment to which the present invention is applied, the lid supporting structure includes: the leg shield 29 as a body cover; and the detachable lid 48 which is designed to cover the recessed portion 60 provided in the leg shield 29, the lid 48 is supported by the upper support hole portion 70 and the lower support hole portion 71 which are located at a position inward of one end part of the recessed portion 60 by the predetermined distance L and is supported by the locking hole 72 which is located in the other end part of the recessed portion 60, and the space S is provided between the lid 48 and the recessed portion 60 in an area extending between the set of the upper support hole portion 70 and the lower support hole portion 71 and one end part of the recessed portion 60. Accordingly, by pushing one end part of the lid 48 toward the space S, this one end part is moved toward the space S whereas the other end part of the lid 48 is floated, and thus the support by the locking hole 72 located in the other end part is released. Thereby, it is possible to support the lid 48 without screws, a handgrip, and the like and detach the lid 48 easily by pushing one end part of the lid 48, thus improving the design and the ease of detachment of the lid 48.

In addition, the locking hole 72 is provided at a position corresponding to the lid lower edge portion 78 of the lid 48. Thus, the locking piece 82 designed to be locked in the locking hole 72 is located at a low position and therefore the locking piece 82 becomes less likely to be seen, thereby providing good design.

Moreover, the body cover is the leg shield 29 located in front of the legs of a rider, and the recessed portion 60 stores therein the emergency-use key cylinder 41c for releasing the locked state of the storage box 25 of the motorcycle 1. Thereby, it is possible to improve the design and the ease of detachment of the lid 48 of the leg shield 29 which is detached in case of emergency.

Further, the side coupling portion 51 supporting the leg shield 29 is covered with the lid 48. Thereby, the side coupling portion 51 can be hidden with the lid 48 and the design can be improved.

Note that the above embodiment shows one mode to which the present invention is applied, and the present invention is not limited to this embodiment.

In the above embodiment, the recessed portion 60 has been described as an example of a recessed portion of the body cover. However, anything may be employed as the recessed portion instead as long as it has a space provided inside the lid 48, and the concept of the recessed portion also includes an opening which defines a space inside the lid 48.

In addition, in the above embodiment, the lid 48 designed to cover the recessed portion 60 provided in the leg shield 29 has been described as an example of a lid. However, the present invention is not limited to this, and anything may be employed as the lid instead as long as it can cover the recessed portion of the body cover.

Further, in the above embodiment, the description has been given of the case where the push operation portion 87 is pushed after the locking of the lid with the locking piece 82 is released with the rod member T, but the present invention is not limited to this case. For example, it is also possible to employ a configuration where the locking force of the locking piece 82 is set so weak that the locking of the lid with the locking piece 82 is released by simply pushing the push operation portion 87.

### Main Reference Numerals

- 29: LEG SHIELD (BODY COVER)
- 41c: KEY CYLINDER
- 48: LID
- 51: SIDE COUPLING PORTION (LEG SHIELD SUPPORTING PORTION)
- 60: RECESSED PORTION
- 70: UPPER SUPPORT HOLE PORTION (SUPPORT PORTION)
- 71: LOWER SUPPORT HOLE PORTION (SUPPORT PORTION)
- 72: LOCKING HOLE (LOCKING PORTION)
- 78: LID LOWER EDGE PORTION (LOWER EDGE OF LID)
- L: PREDETERMINED DISTANCE
- S: SPACE

## Claims

1. A lid supporting structure including: a body cover (29); and a detachable lid (48) which is designed to cover a recessed portion (60) provided in said body cover (29), wherein
said lid (48) is supported by a support portion (70, 71) which is located at a position inward of a first end part of said recessed portion (60) by a predetermined distance (L), and supported by a locking portion (72) which is located in a second end part of said recessed portion (60), and
a space (S) is provided between said lid (48) and said recessed portion (60) in an area extending between said support portion (70, 71) and said first end part of said recessed portion (60);
**characterized in that**
the lid (48) includes an upper support projecting portion (80) and a lower support projecting portion (81) which stand on a back surface of the lid and protrude to the inside of the recessed portion (60); and that
the upper support projecting portion (80) and the lower support projecting portion (81) respectively include:
base portions (80a, 81a) which are arranged on said back surface of the lid; and
protruding portions (80b, 81b) which are arranged on distal end surfaces of the respective base portions (80a, 81a), wherein, the protruding portions (80b, 81b) respectively include: protrusion supporting pieces (84) which are formed integrally on the distal end surfaces of the respective base portions (80a, 81a); and protrusions (85) which are mounted on the protrusion supporting pieces (84) so as to cover the protrusion supporting pieces from their outer sides.

2. The lid supporting structure according to claim 1, wherein said locking portion (72) is provided at a position corresponding to a lower edge (78) of said lid (48).

3. The lid supporting structure according to claim 1 or 2, wherein said body cover is a leg shield (29) located in front of the legs of a rider, and said recessed portion (60) stores therein an emergency-use key cylinder (41c) for releasing a locked state of a vehicle.

4. The lid supporting structure according to claim 3, wherein a leg shield supporting portion (51) supporting said leg shield (29) is covered with said lid (48).

## Patentansprüche

1. Eine Deckelträgerstruktur mit: einer Körperabdeckung (29); und einem abnehmbaren Deckel (48), der entworfen ist, um einen zurückgesetzten Abschnitt (60), der in der Körperabdeckung (29) vorgesehen ist, zu bedecken, wobei:
der Deckel (48) durch einen Trägerabschnitt (70, 71) getragen wird, der sich an einer Position von einem ersten Endteil des zurückgesetzten Abschnitts (60) um eine vorbestimmte Entfernung (L) nach innen gehend befindet und durch einen Verriegelungsabschnitt (72) getragen wird, der sich in einem zweiten Endteil des zurückgesetzten Abschnitts (60) befindet, und
ein Raum (S) zwischen dem Deckel (48) und dem zurückgesetzten Abschnitt (60) in einem Bereich vorgesehen ist, der sich zwischen dem Trägerabschnitt (70, 71) und dem ersten Endteil des zurückgesetzten Abschnitts (60) erstreckt;
**dadurch gekennzeichnet, dass**:
der Deckel (48) einen oberen vorstehenden Trägerabschnitt (80) und einen unteren vorstehenden Trägerabschnitt (81) aufweist, die auf einer Rückoberfläche des Deckels stehen und in das Innere des zurückgesetzten Abschnitts (60) vorspringen; und dadurch, dass:
der obere vorstehende Trägerabschnitt (80) bzw. der untere vorstehende Trägerabschnitt (81) folgende Merkmale aufweisen:
Basisabschnitte (80a, 81a), die an der Rückoberfläche des Deckels angeordnet sind; und
vorspringende Abschnitte (80b, 81b), die an distalen Endoberflächen der jeweiligen Basisabschnitte (80a, 81a) angeordnet sind, wobei die jeweiligen vorspringenden Abschnitte (80b, 81b) folgende Merkmale aufweisen: Vorsprungträgerstücke (84), die einstückig an den distalen Endoberflächen der jeweiligen Basisabschnitte (80a, 81a) gebildet sind; und Vorsprünge (85), die an den Vorsprungträgerstücken (84) befestigt sind, um so die Vorsprungträgerstücke von ihren Außenseiten zu bedecken.

2. Die Deckelträgerstruktur gemäß Anspruch 1, bei der der Verriegelungsabschnitt (72) an einer Position vorgesehen ist, die einem unteren Rand (78) des Deckels (48) entspricht.

3. Die Deckelträgerstruktur gemäß Anspruch 1 oder 2, bei der die Körperabdeckung ein Beinschild (29) ist, das sich vor den Beinen eines Fahrers befindet, und der zurückgesetzte Abschnitt (60) in sich einen Notfallschlüsselzylinder (41c) zum Lösen eines verriegelten Zustands eines Fahrzeugs lagert.

4. Die Deckelträgerstruktur gemäß Anspruch 3, bei der ein Beinschildträgerabschnitt (51), der das Beinschild (29) trägt, mit dem Deckel (48) bedeckt ist.

## Revendications

1. Structure de support de couvercle incluant : un recouvrement de corps (29) ; et un couvercle détachable (48) qui est conçu pour recouvrir une portion évidée (60) prévue dans ledit recouvrement de corps (29), dans laquelle
ledit couvercle (48) est supporté par une portion de support (70, 71) qui est située dans une position vers l'avant d'une première partie d'extrémité de ladite portion évidée (60) d'une distance prédéterminée (L), et supporté par une portion de verrouillage (72) qui est située dans une seconde partie d'extrémité de ladite portion évidée (60), et
un espace (S) est prévu entre ledit couvercle (48) et ladite portion évidée (60) dans une zone s'étendant entre ladite portion de support (70, 71) et ladite première partie d'extrémité de ladite portion évidée (60) ;
**caractérisée en ce que**
le couvercle (48) inclut une portion en saillie de support supérieur (80) et une portion en saillie de support inférieur (81) qui reposent sur une surface arrière du couvercle et font saillie vers l'intérieur de la portion évidée (60) ; et que
la portion en saillie de support supérieur (80) et la portion en saillie de support inférieur (81) incluent respectivement :
des portions de base (80a, 81a) qui sont disposées sur ladite surface arrière du couvercle ; et
des portions en saillie (80b, 81b) qui sont disposées sur des surfaces d'extrémité distale des portions de base respectives (80, 81a) dans laquelle les portions en saillie (80b, 81b) incluent respectivement : des pièces de support de saillie (84) qui sont formées intégralement sur les surfaces d'extrémité distale des portions de base respectives (80a, 81a) ; et des saillies (85) qui sont montées sur les pièces de support de saillie (84) de sorte à couvrir les pièces de support de saillie de leurs côtés extérieurs.

2. Structure de support de couvercle selon la revendication 1, dans laquelle ladite portion de verrouillage (72) est prévue sur une position correspondant à une arête inférieure (78) dudit couvercle (48).

3. Structure de support de couvercle selon la revendication 1 ou 2, dans laquelle ledit recouvrement de corps est un protège-jambe (29) situé en face des jambes d'un motard, et ladite portion évidée (60) stocke dedans un cylindre de clé destiné à une utilisation d'urgence (41c) pour la libération d'un état verrouillé d'un véhicule.

4. Structure de support de couvercle selon la revendication 3, dans laquelle une portion de support de protège-jambe (51) supportant ledit protège-jambe (29) est recouverte dudit couvercle (48).
